Europäisches Patentamt

European Patent Office

Office européen des brevets

(19)

(11) Publication number: **0 254 836 B1**

## EUROPEAN PATENT SPECIFICATION

(12)

(45) Date of publication of patent specification: **26.08.92** (51) Int. Cl.⁵: **C09K 11/85**

(21) Application number: **87107764.0**

(22) Date of filing: **27.05.87**

The file contains technical information submitted
after the application was filed and not included in
this specification

(54) **Europium activated barium strontium magnesium fluorobromide photostimulable phosphor.**

(30) Priority: **30.06.86 US 880522**

(43) Date of publication of application:
**03.02.88 Bulletin 88/05**

(45) Publication of the grant of the patent:
**26.08.92 Bulletin 92/35**

(84) Designated Contracting States:
**DE GB NL**

(56) References cited:
**EP-A- 0 021 342**
**EP-A- 0 159 014**
**EP-A- 0 159 015**
**FR-A- 2 430 969**
**NL-A- 8 302 536**

(73) Proprietor: **GTE Products Corporation**
**100 West 10th Street**
**Wilmington, DE 19801(US)**

(72) Inventor: **Reddy, Vaddi Butchi**
**120 Vista Dr. Apt. 5**
**Sayre, PA 18840(US)**
Inventor: **Bueno, Clifford**
**316 Escuela Avenue Apt. 35**
**Mountain View, CA 94040(US)**
Inventor: **Karam, Ronald Edward**
**R.D. 1 Box 212**
**Towanda, PA 18848(US)**

(74) Representative: **Patentanwälte Grünecker,**
**Kinkeldey, Stockmair & Partner**
**Maximilianstrasse 58**
**W-8000 München 22(DE)**

EP 0 254 836 B1

## Description

The invention relates to a photostimulable phosphor composition consisting essentially of barium-strontium magnesium fluorobromide which when exposed to $\Upsilon$-, X- or UV radiations absorbs the radiation energy and stores completely or partially in its energy trapping centers until the material is stimulated by a visible or infrared radiation. Upon stimulation by a stimulating radiation of 500-1000 nm wavelength, the phosphor emits the stored energy in the form of light. This process is called photostimulated emission. Said stimulated emission light can be detected by a photomultiplier. In order to have an efficient stimulation emission detection, a phosphor should emit its luminescence below 500 nm wavelength since the stimulating radiation wavelength was 633 nm (He-Ne laser). It is well known in the art that barium europium fluorobromide emits its photostimulated luminescence (PSL) around 390 nm.

NL-A-8302536 discloses a terbium activated alkaline earth complex metal fluorohalide phosphor.

EP-A-0159014 discloses a divalent europium activated complex halide phosphor.

EP-A-0159015 discloses a radiation image recording and reproducing method using a divalent europium activated complex halide phosphor.

EP-A-0021342 discloses a rare earth element activated complex halide phosphor.

It is the object of the present invention to provide a photostimulable phosphor composition which gives sharp and clear radiographs when used in filmless radiograph applications.

Said object is achieved by a photostimulable phosphor composition consisting essentially of europium activated barium-strontium magnesium fluorobromide containing an effective amount of both stronium and magnesium having the general formula

$$Ba_{1-x-y-z}Sr_xMg_yEu_zFBr$$

wherein x and y are values greater than 0 and less than 0.15, the ratio of x to y is from 2:3 to 3:2 and z is from 0.0004 to 0.004, the europium concentration being at least 0.05 % by weight and the phosphor being obtainable from europium oxychloride as europium source and ammonium bromide as bromine source.

Furthermore, a process for producing this composition is provided comprising

a) forming a relatively uniform admixture of raw materials consisting essentially of a barium source, a strontium source, a magnesium source, europium oxychloride as europium source, ammonium bromide as bromine source and a fluorine source, wherein the atomic ratio of Br to F in said admixture is about 1:1,

b) heating said admixture in a reducing atmosphere and at a temperature of from 750°C to 900°C for a time sufficient to at least partially convert the raw materials to a barium-strontium magnesium europium fluorobromide,

c) cooling said partially converted raw materials composition to ambient temperature in a nitrogen atmosphere,

d) heating said cooled partially converted raw materials to a temperature of from 750°C to 900°C for a time sufficient to essentially completely convert the raw materials to barium-strontium magnesium-europium fluorobromide,

e) cooling said barium-strontium magnesium-europium fluorobromide to ambient temperature in a nitrogen atmosphere and

f) washing the cooled material with ethyl alcohol.

For a better understanding of the present invention, reference is made to the following disclosure in connection with the above description of some of the aspects of the invention.

In this invention europium activated barium strontium magnesium fluorobromide is provided. The europium level is at least 0.05% by weight. Amounts of up to 5% by weight can be used, however, increases above 0.1% by weight do not increase the emission intensity of the material hence are not preferred. A level of 0.1% ± .02% by weight of europium is especially preferred.

An effective amount of both strontium and magnesium is included in the phosphor host. "An effective amount" as used herein means the amount of magnesium and strontium necessary to provide a photostimulable phosphor having at least 5% greater emission intensity than barium fluorobromide, barium strontium fluorobromide or barium magnesium fluorobromide when all phosphors are activated with essentially the same level of europium of about 0.1% by weight.

For test purpose samples of material passing through a 37 $\mu$m (400 mesh) screen are exposed to 90KVp x-rays and then stimulated with 633 nm He-Ne laser light and the stimulated light emission (brightness) is measured and recorded on a strip chart recorder. The atomic ratio of Sr to Mg is from 3:2 to 2:3. The amount of both strontium and magnesium is preferably from 0.5% to 6% by weight.

In the claimed composition x is preferably from 0.02 to 0.04, y is preferably from 0.01 to 0.03 and z is preferably from 0.001 to 0.003. It is particularly preferred that x is 0.032, y is 0.025 and z is 0.0018.

In the practice of this invention the phosphor compositions are prepared by a solid state reaction in which an admixture of the raw materials is prepared and then is subjected to a double firing or heating. Cooling is carried out in a nitrogen atmosphere. The preferred source of barium is barium fluoride. The preferred source of strontium is strontium chloride. The preferred source of magnesium is magnesium chloride. Europium is provided by europium oxychloride.

Ammonium bromide is the source of bromine. It is necessary that the F:Br atomic ratio in the raw material used is about 1:1 to form the fluorobromide salt. It is also necessary that there is a fluorine ion and a bromine ion present for each metal ion that is for each of barium, magnesium, strontium and europium.

The appropriate sources of the raw materials are blended using standard techniques to form a relatively uniform admixture. Thereafter the admixture is heated to 750°C to 900°C in a reducing atmosphere for a time sufficient to convert the various raw material sources to a barium magnesium strontium europium fluorobromide. The time required will depend upon the amount of the material being heated and the temperature. In most instances from about 0.5 to 3 h is sufficient to achieve an initial reaction. After the initial heating or firing the mixture, which contains partially converted fluorobromide raw material, is cooled in a nitrogen atmosphere from the firing temperature to an ambient temperature. After the partially converted material reaches ambient temperature it is pulverized by grinding and then reheated to 750°C to 900°C for an additional period sufficient to fully convert the material to the fluorobromide salt. Generally about 0.5 to about 3 h is sufficient to fully convert the material to the photostimulable phosphor having the improved properties, however, the material is cooled to ambient temperature in a nitrogen atmosphere. It has been found that cooling in a flowing atmosphere of nitrogen yields a superior brightness over the materials that are cooled in the furnace without nitrogen or cooled outside the furnace in an air atmosphere. After cooling the material is pulverized, seived through an approriate screen (generally a 74 $\mu$m (200 mesh) screen). The sieved material is washed with reagent ethyl alcohol. It has been found that water degrades the phosphor. After drying the washed material is sieved through a 37 $\mu$m (400 mesh) screen.

To more fully illustrate the subject invention, the following detailed examples are presented. All parts, proportions and percentages are by weight unless otherwise indicated.

Example 1

A mixture containing 171.32 parts of $BaF_2$, 4.05 parts of $SrF_2$, 102.0 parts of $NH_4Br$, 5.075 parts of magnesium chloride hexahydrate and 0.36 parts of freshly prepared EuOCl are well blended. All the materials are pulverized before mixing.

The above mixture is placed in a fused silica boat and fired in an electric tube furnace under nitrogen/1.5% hydrogen atmosphere for 2-3 h at 875°C ± 10°C. After the firing is complete, the crucible is cooled in a flowing nitrogen atmosphere (16 1/min flow) for about 1.0 h. The cake is then pulverized, sieved through a 74 $\mu$m (200 mesh) screen and refired under the same conditions. The refired product is cooled, pulverized, sieved and washed with 600 ml reagent alcohol to dissolve any individual bromide impurities. The resulting material is then dried in an electric oven at about 110°C for about 1.0 h and sieved through desired mesh size screen and measured for its photostimulated light output: The brightness of this material, having a general formula of $Ba_{0.941}Sr_{0.0322}Mg_{0.025} Eu_{0.0018}FBr$, is 4700 percent when LaOBr:Bi is taken as 100.

Comparative Example 1

About 175.3 parts of $BaF_2$, about 102.0 parts of $NH_4Br$ and 0.36 parts of EuOCl are mixed as was described In Example 1. Small lots of this reaction mixture are fired under similar conditions for about one half hour at 875°C ±10°. Refiring is performed under the same conditions as first firing, and the post firing treatment is exactly the same as reported in Example 1. These experiments give materials of a general formula $Ba_{0.9982}Eu_{0.0018}FBr$ composition and the brightness is 2900 percent compared to the 100 brightness taken for LaOBr:Bi.

Comparative Example 2

About 44.0 parts of $BaF_2$ and about 83.7 parts of $BaBr_2 2H_2O$ are pulverized and well mixed. The mixed material is loaded into a fused silica boat and fired at 300°C for 2-3 h in a tube furnace under $N_2/1.0\%H_2$ atmosphere. The fired material is cooled and pulverized. About 47.3 parts of this BaFBr material is weighed and well mixed with about 0.0712 parts of $Eu_2O_3$ and fired with about 0.004 mole of NaBr flux at 600°C for about 2.0 h under $N_2/1.0\%H_2$ atmosphere. It is then pulverized, washed with reagent alcohol, dried and sieved through a 74 $\mu$m (200 mesh) screen. The composition has the general formula $Ba_{0.998}Eu_{0.002}FBr$. The brightness of the material is 20% of a LaOBr:Bi standard material. It is clear from comparative examples 1 and 2 that the preferred bromine source is ammonium bromide.

Example 2

About 175.0 parts of $BaF_2$, 102.0 parts of $NH_4Br$ and 0.36 parts EuOCl are mixed as described in Example 1. Small lots of this mixture are loaded to silica boats and fired under similar conditions for one half hour at 875±10C°. The boat is then cooled in the furnace while the furnace is shut off. Refiring is performed exactly under the same conditions and cooled again in the furnace as is the case in the first firing step. The post firing process is exactly similar as described in earlier examples. This material gives a composition $Ba_{0.9982}Eu_{0.0018}FBr$ and the brightness is 1700 percent compared to the 100 brightness taken for LaOBr:Bi.

## Example 3

All the procedures are exactly similar to the one described in Example 2 except that the fired boats are cooled in a $N_2$ cooling chamber. These materials give a composition $Ba_{0.9982}Eu_{0.0018}FBr$ and the brightness is 2700 percent compared to the 100 brightness taken for LaOBr.

## Claims

1. A photostimulable phosphor composition consisting essentially of europium activated barium-strontium magnesium fluorobromide containing an effective amount of both strontium and magnesium having the general formula

$$Ba_{1-x-y-z}Sr_xMg_yEu_zFBr$$

wherein x and y are values greater than 0 and less than 0.15, the ratio of x to y is from 2:3 to 3:2 and z is from 0.0004 to 0.004, the europium concentration being at least 0.05 % by weight and the phosphor being obtainable from europium oxychloride as europium source and ammonium bromide as bromine source.

2. The composition of claim 1 wherein the amount of both strontium and magnesium is from 0.5 % to 6% by weight of said composition.

3. The composition of claim 1 wherein x is from 0.02 to 0.04 and y is from 0.01 to 0.03.

4. The composition of claim 1 wherein z is from 0.001 to 0.003.

5. The composition of claim 1 wherein x is 0.032, y is 0.025 and z is 0.0018.

6. A process for producing a phosphor composition according to any of claims 1 to 5 comprising:

a) forming a relatively uniform admixture of raw materials consisting essentially of a barium source, a strontium source, a magnesium source, europium oxychloride as europium source, ammonium bromide as bromine source and a fluorine source, wherein the atomic ratio of Br to F in said admixture is about 1:1,
b) heating said admixture in a reducing atmosphere and at a temperature of from 750°C to 900°C for a time sufficient to at least partially convert the raw materials to a barium-strontium magnesium europium fluorobromide,
c) cooling said partially converted raw materials composition to ambient temperature in a nitrogen atmosphere,
d) heating said cooled partially converted raw materials to a temperature of from 750°C to 900°C for a time sufficient to essentially completely convert the raw materials to barium-strontium magnesium-europium fluorobromide,
e) cooling said barium-strontium magnesium-europium. fluorobromide to ambient temperature in a nitrogen atomsphere and
f) washing the cooled material with ethyl alcohol.

7. The process of claim 6, wherein said barium source is barium fluoride, said strontium source is strontium fluoride, and said magnesium source is magnesium chloride.

## Patentansprüche

1. Lichtstimulierbare Leuchtstoffzusammensetzung, welche im wesentlichen aus mit Europium aktiviertem Barium-Strontium-Magnesium-Fluorbromid besteht, enthaltend eine wirksame Menge sowohl an Strontium als auch Magnesium, mit der allgemeinen Formel

$$Ba_{1-x-y-z}Sr_xMg_yEu_zFBr$$

worin x und y Werte von mehr als 0 und weniger als 0.15 sind, das Verhältnis von x zu y 2:3 bis 3:2 ist und z 0.0004 bis 0.004 ist, wobei die Europium-Konzentration wenigstens 0.05 Gewichtsprozent ist und der Leuchtstoff aus Europiumoxychlorid als Europiumquelle und Ammoniumbromid als Bromquelle erhältlich ist.

2. Zusammensetzung nach Anspruch 1, worin die Menge sowohl von Strontium als auch Magnesium 0.5 - 6 Gewichtsprozent der Zusammensetzung beträgt.

3. Zusammensetzung nach Anspruch 1, worin x 0.02 bis 0.04 ist und y 0.01 bis 0.03 ist.

4. Zusammensetzung nach Anspruch 1, worin z 0.001 bis 0.003 ist.

5. Zusammensetzung nach Anspruch 1, worin x 0.032 ist, y 0.025 ist und z 0.0018 ist.

6. Verfahren zur Herstellung einer Leuchtstoffzusammensetzung nach einem der Ansprüche 1 bis 5, daß

a) das Bilden einer relativ gleichmäßigen Mischung aus Ausgangsmaterialien, bestehend im wesentlichen aus einer Bariumquelle, einer Strontiumquelle, einer Magnesiumquelle, Europiumoxychlorid als Europiumquelle, Ammoniumbromid als Bromquelle und einer Fluorquelle, worin das Atomverhältnis von Br zu F in der Mischung etwa 1:1 ist,

b) das Erwärmen der Mischung in reduzierender Atmosphäre und bei einer Temperatur von 750°C bis 900°C über eine Zeit, die ausreichend ist, um wenigstens einen Teil der Ausgangsmaterialien in ein Barium-Strontium-Magnesium-Europium-Fluorbromid umzuwandeln,

c) das Kühlen der teilweise umgewandelten Ausgangsmaterialien auf Umgebungstemperatur in einer Stickstoffatmosphäre,

d) das Erwärmen der gekühlten, teilweise umgewandelten Ausgangsmaterialien auf eine Temperatur von 750°C bis 900°C über eine Zeit, die ausreichend ist, um im wesentlichen alle Ausgangsmaterialen in Barium-Strontium-Magnesium-Europium-Fluorbromid umzuwandeln,

e) das Kühlen des Barium-Strontium-Magnesium-Europium-Fluorbromids auf Umgebungstemperatur in einer Stickstoffatmosphäre und

f) das Waschen des gekühlten Materials mit Äthylalkohol umfaßt.

7. Verfahren nach Anspruch 6, worin die Bariumquelle Bariumfluorid ist, die Strontiumquelle Strontiumfluorid ist und die Magnesiumquelle Magnesiumchlorid ist.

**Revendications**

1. Composition de luminophore photostimulable comprenant essentiellement du fluorobromure de baryum-strontium magnesium activé à l'europium contenant une quantite effective à la fois de strontium et de magnesium, ayant la formule générale :

$$Ba_{1-x-y-z}Sr_xMg_yEu_zFBr$$

dans laquelle x et y sont des valeurs supérieures a 0 et inférieures à 0,15, le rapport de x a y est compris entre 2 à 3 et 3 à 2, et z est compris entre 0,0004 et 0,004, la concentration de l'europium étant au moins 0.05% en poids et le luminophore étant obtenable à partir d'oxychlorure d'europium en tant que source d'europium, et de bromure d'ammonium en tant que source de brome.

2. Composition selon la revendication 1 dans laquelle la quantité du strontium et du magnesium est comprise entre 0,5 % et 6 % en poids de la dite composition.

3. Composition selon la revendication 1 dans laquelle x est compris entre 0,02 et 0,04 et y entre 0,01 et 0,03.

4. Composition selon la revendication 1 dans laquelle z est compris entre 0,001 et 0,003.

5. Composition selon la revendication 1 dans laquelle x est égal à 0,032, y est égal à 0.025 et z est égal à 0,0018.

6. Procédé de fabrication d'une composition de luminophore selon l'une quelconque des revendications 1 à 5 comprenant :

a) la formation d'un mélange relativement uniforme de matériaux bruts comprenant essentiellement une source de baryum, une source de strontium, une source de magnésium, de l'oxychlorure d'europium en tant que source d'europium, du bromure d'ammonium en tant que source de brome, et une source de fluor, dans laquelle le rapport atomique du Br au F dans la dite composition est de 1 à 1 environ;

b) le chauffage du dit mélange en atmosphère reductrice et à une température comprise entre 750 et 900 °C pendant un temps suffisant pour convertir au moins partiellement les matériaux bruts en fluorobromure de baryum-strontium magnésium-europium.

c) le refroidissement de la dite composition de matériaux bruts partiellement convertis à température ambiante dans l'azote;

d) le chauffage des dits matériaux bruts partiellement convertis refroidis à une température comprise entre 750 et 900 °C pendant un temps suffisant pour essentiellement convertir complètement les matériaux bruts en du fluorobromure de baryum-strontium magnésium-europium;

e) le refroidissement du dit fluorobromure de baryum-strontium magnésium-europium à température ambiante dans l'azote; et

f) le lavage du matériau refroidi avec de l'alcool éthylique.

7. Procédé selon la revendication 6 dans lequel la dite source de baryum est du fluorure de baryum, la dite source de strontium est du fluorure de strontium et la dite source de magnésium est du chlorure de magnésium.